Europäisches Patentamt

(19) European Patent Office

Office européen des brevets

(11) Publication number: **0 057 164**
**B1**

(12) **EUROPEAN PATENT SPECIFICATION**

(45) Date of publication of patent specification: **24.04.85**

(51) Int. Cl.⁴: **B 23 K 26/02, H 01 S 3/06**

(21) Application number: **82830012.9**

(22) Date of filing: **22.01.82**

(54) **Device for coupling a laser beam to a fibre optic.**

(30) Priority: **22.01.81 IT 4761581**

(43) Date of publication of application:
**04.08.82 Bulletin 82/31**

(45) Publication of the grant of the patent:
**24.04.85 Bulletin 85/17**

(84) Designated Contracting States:
**DE FR GB NL SE**

(56) References cited:
**GB-A-1 594 336**
**US-A-3 454 330**
**US-A-3 703 176**
**US-A-3 870 398**

**ELECTRONIC COMPONENTS &**
**APPLICATIONS, vol. 1, no. 2, February 1979,**
**page 129, Eindhoven (NL); "Semiconductor**
**laser creates its own lens"**

(73) Proprietor: **SELENIA INDUSTRIE**
**ELETTRONICHE ASSOCIATE S.p.A.**
**Via Tiburtina, KM 12.400**
**I-00131 Roma (IT)**

(72) Inventor: **Penco, Eugenio**
**Via Bevignani, 12**
**I-00186 Roma (IT)**
Inventor: **Tranquilli, Angelo**
**Vicolo di Via Gregoriana 1**
**I-00044 Frascati (Rome) (IT)**
Inventor: **Tomassini, Maurizio**
**Via Cassia, 1020**
**I-00189 Roma (IT)**

(74) Representative: **Gustorf, Gerhard, Dipl.-Ing.**
**Mühlenstrasse 1**
**D-8300 Landshut (DE)**

Courier Press, Leamington Spa, England.

**Description**

The present invention relates to a device for coupling a laser beam to an optical fibre in accordance with the generic clause of claim 1.

Nowadays, lasers are used as transmitters for optical communication systems. In optical communication systems optical fibres are used for guiding the laser beam to an optical receiver. In medical applications lasers are used as energy sources. In this case the optical fibre which is optically coupled to the laser acts as a bistoury for operations both internally and externally to the body. The laser powers required in these applications are rather high, namely in the range of 10—100W. Hence the optical coupling takes place between a laser having relatively large dimensions and an optical guiding element or optical fibre which is of the sub-millimetric dimensions. Hence highly integrated solutions, which are common in the case of optical communication systems in which the laser has dimensions comparable to the optical fibre have not yet been carried out in these high-power applications.

Hence one usually utilizes a lens for focusing the laser beam to an end face of the optical fibre, wherein an output mirror of the laser can be inclined with respect to two orthogonal planes, wherein the focussing lens can be translated in two orthogonal directions and can be inclined with respect to two orthogonal directions, and wherein the optical fibre can be translated in three orthogonal directions. Such a mutual adjustability of the system, necessitates different mechanical supports for the output mirror, the lens and the optical fibre having a complex structure. Another drawback of this prior art device consists in that the mutual alignment of the output mirror, the lens and the optical fibre causes a great deal of work.

The present invention is based on the technical task of how to provide a device in accordance with the generic clause of claim 1 such that the deviation and the direction of the laser beam with respect to the optical axis of the optical fibre can be easily adjusted wherein the device should have a compact and simple structure.

This technical task is solved by a device in accordance with the generic clause of claim 1 having the characterising features thereof.

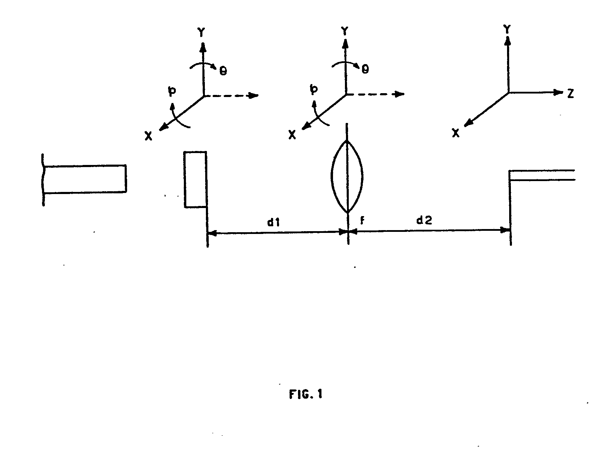

In view of the state of art mentioned above, which will be described in detail with the reference to figure 1, the device in accordance with the present invention has the following advantages:

(a) The length of the launcher is solely conditioned by the focal length of the lens which is typically in the range of 5—10 centimetres.

(b) The coupling efficiency which can be attained with the device in accordance with the present invention is better than the coupling efficiency of non-integrated devices having a distance $d_1$ between the mirror and the lens which is smaller than twice the focal length f.

(c) The elimination of the lens as used in the prior art device as an isolated component enables the removal of a support element for the mechanical alignment thereof by micrometric translational and pivotal adjustments.

(d) Contrary to the movements of the prior art system, the movements necessary for aligning the wedges are only rotational movements. The positioning of the wedges between the laser and the optical fibre is not critical.

(e) The implementation of a conical-stub metallic shield (which also shields the laser beam) supporting the optical fibre and centring it with respect to the geometric axis of the system allows the x—y-movements of the fibre support to be eliminated since the position is accomplished by the wedges. Only the movement along the z-axis cannot be eliminated because it is essential to attain the best focalization conditions.

(f) The elimination of a plurality of adjustment movements guarantees a superior system stability.

(g) The simplicity of the aligning movements enables the implementation of the device at lower costs than compared with the costs of the state of art embodiment.

The focal lens is integrated with the output mirror of the laser, both constituting a plano-convex optical device. The coaxial alignment of the output beam emitted from said plano-convex optical device with respect to the axis of the optical fibre is attained by using wedges having a small angle α which allows the beam to be rotated along a conic surface whose aperture can be varied according to the mutual position of the two prisms from 0° to $\alpha\sqrt{2}$°.

Hereinafter, an embodiment of the prior art device mentioned above and a preferred embodiment in accordance with the present invention will be described with reference to the attached figures, in which figure 1 schematically shows a prior art device,

figure 2 shows a laser beam passing through the focalizing lens,

figure 3 shows a representation of the device in accordance with the present invention.

The prior art device shown in figure 1 comprises a laser, an output mirror, a lens and an optical fibre. The output mirror of the laser is so mounted as to be pivoted with respect to two orthogonal axes x, y. Similarly the lens is supported such that it can be pivoted with respect to two orthogonal axes x, y and that it can be moved in two orthogonal directions x, y. The optical fibre can be moved along three orthogonal directions x, y and z. Reference numeral $d_1$ designates the distance between the output mirror and the lens; f is the focal length of the lens. Reference numeral $d_2$ designates the distance between the lens and the optical fibre.

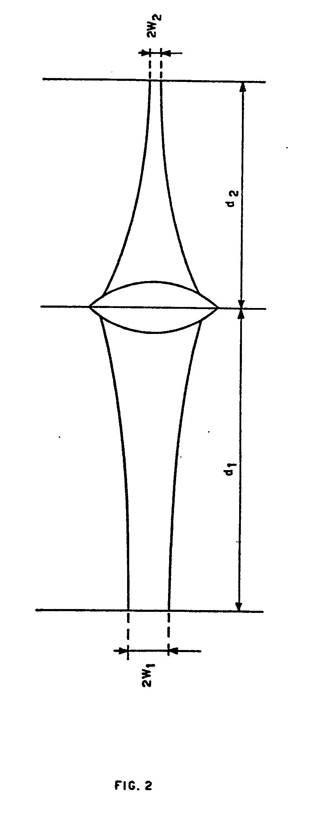

Figure 2 shows the laser beam passing through the focalizing lens, the diameter of the laser beams at the output mirror is designated with 2 $W_1$. Similarly, 2 $W_2$ is the focussed diameter of the laser beam at input plane of the optical fibre. The

coupling can be enhanced by reducing the diameter of the beam at the input plane by means of suitably choosing the distances $d_1$ and $d_2$ and the focal length f, wherein f comes close to $d_2$.

Practical values of $d_1$, $d_2$ and f are limited by the criterion of maintaining a reasonable compactness of the coupling device.

The optimal value of $d_1$, i.e. in the case of minimal values of $W_2$, is obtained for values of $d_1$ which essentially exceed the double focal length 2f. An analysis of the evolution of the gaussian beams leads to the condition $d_1=0$ equivalents to $d_1=2f$. This allows a considerable compactness of the device.

This condition is implemented by integrating the lens in the output mirror of the laser, i.e. by implementing a plano-convex optical device, wherein the plane face thereof has an optical reflecting power suitable for the operation of the laser, and wherein its convex face is covered by an anti-reflectant coating and has a suitable curvature for implementing the described focal lengths. This integrated structure allows the movements of the lens to be eliminated, since the lens is automatically aligned with respect to the mirror within the tolerances of the optical device. On the other hand the use of a conic-stub metallic structure enabling the optical fibre to be aligned with respect to the geometric optical axis of the laser enables the elimination of x—y-movements of the fibre-support while maintaining the translational degree of freedom along the z-axis to obtain the best focussed conditions.

The wedges 4, 4', each having a small angle α having typical values of about 2° allow the rotation of the laser beam along a conic surface, whose aperture can be varied according to the mutual position of the two prisms 4, 4' from 0° to $\alpha\sqrt{2}°$. The rotation of these two wedges 4, 4' can be accomplished by means of a rack and pinion drive.

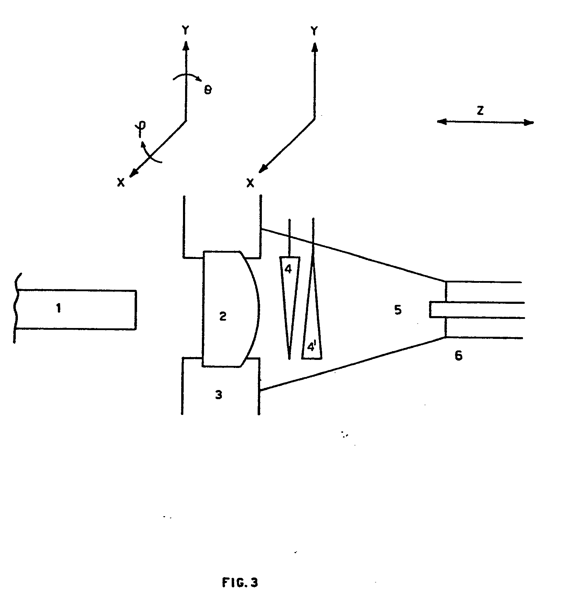

In figure 3, reference numeral 1 indicates the laser having an integrated output mirror comprising the focussing lens 2 having a plane and convex surface, wherein the lens 2 is secured by supports 3. Reference numerals 4, 4' indicate the wedges for aligning the beam with respect to the axis of the optical fibre 5 which is sustained by the structure 6.

## Claims

1. Device for coupling a laser beam (1) to an optical fibre (5) comprising a lens for focussing the laser beam (1) to an end face of said optical fibre (5) characterised by a plano-convex lens (2) whose planar face constitutes the output mirror of the laser (1), and by a double-wedge (4, 4') comprising two small angle wedges of variable power, by which the deviation and the direction of the laser beam can be adjusted to the optical fibre (5).

2. Device according to claim 1, characterised in that said focussing lens (2) is covered by an anti-reflectant coating.

3. Device according to claim 1 or 2, characterised in that the optical fibre (5) is retained by a rigid support (6) in the form of a truncated cone, which enables the optical fibre (5) only to move along its longitudinal axis in order to obtain the best focussed condition.

4. Device according to claims 1 to 3, characterised in that the mutual position of said wedges (4, 4') is obtained by means of a rack and pinion drive.

5. Device according to claims 1 to 4, characterised in that the small angle of said wedges (4, 4') is in the range of 2°.

## Revendications

1. Dispositif de couplage d'un faisceau laser (1) à une fibre optique (5) comprenant une lentille de concentration du faisceau laser (1) sur une face d'extrémité de ladite fibre optique (5), caractérisé par une lentille plan-convexe (2) dont la face plane constitue le miroir de sortie du laser (1) et par un double coin (4, 4') constitué de deux petits coins de puissance variable qui permettent d'ajuster l'écart et la direction du faisceau laser par rapport à la fibre optique (5).

2. Dispositif selon la revendication 1, caractérisé par le fait que ladite lentille de concentration (2) est recouverte d'un revêtement anti-reflet.

3. Dispositif selon la revendication 1 ou 2, caractérisé par le fait qui la fibre optique (5) est maintenue par un support rigide (6) ayant la forme d'un tronc de cône, qui permet à la fibre optique (5) de se déplacer uniquement le long de son axe longitudinal afin d'obtenir les meilleures conditions de concentration.

4. Dispositif selon l'une des revendications 1 à 3, caractérisé par le fait que la position mutuelle des coins (4, 4') est définie au moyen d'un entraînement à crémaillère et pignon.

5. Dispositif selon l'une des revendications 1 à 4, caractérisé par le fait que le petit angle desdits coins (4, 4') se situe au voisinage de 2°.

## Patentansprüche

1. Gerät zum Einkoppeln eines Laserstrahls in einen Lichtleiter (5), mit einer Linse zum Bündeln des Laserstrahls auf eine Endfläche des Lichtleiters (5), gekennzeichnet durch plan-konvexe Linse (2), deren plane Fläche den Ausgangsspiegel des Lasers (1) bildet und durch einen Doppelkeil (4, 4') mit zwei Keilen von kleinem Winkel mit veränderlicher Brechkraft, durch die die Abweichung und die Richtung des Laserstrahls bezüglich Glasfaser (5) eingestellt werden kann.

2. Gerät nach Anspruch 1, dadurch gekennzeichnet, daß die bündelnde Linse (2) mit einer Antireflektionsbeschichtung beschichtet ist.

3. Gerät nach Anspruch 1 oder 2, dadurch gekennzeichnet, daß der Lichtleiter (5) durch eine feste Halterung (6) in der Form eines kegelstumpfförmigen Konus gehalten wird, der dem Lichtleiter (5) lediglich eine Bewegung längs seiner Längsachse ermöglicht, um den besten, gebündelten Zustand zu erreichen.

4. Gerät nach einem der Ansprüche 1 bis 3, dadurch gekennzeichnet, daß die gegenseitige Lage der Keile (4, 4') mittels eines Zahnstangengetriebes erhalten wird.

5. Gerät nach einem der Ansprüche 1 bis 4, dadurch gekennzeichnet, daß die kleinen Winkel der Keile (4, 4') in der Größen-ordnung von 2° liegen.

FIG. 1

FIG. 2

FIG. 3